# EUROPÄISCHE PATENTANMELDUNG

(11) **EP 1 477 453 A1**
(43) Veröffentlichungstag der Anmeldung: **17.11.2004**
(21) Anmeldenummer: 04008670.4
(22) Anmeldetag: 10.04.2004
(51) Int. Cl.: B66F 9/075, B66F 9/10, B62D 11/00, B60T 8/24

(54) **Schubmaststapler**

(30) Priorität: 14.05.2003 DE 10321569
(71) Anmelder: Jungheinrich Aktiengesellschaft, 22047 Hamburg (DE)
(72) Erfinder: Hüther, Sebastian, Dipl.-Ing., 24568 Kaltenkirchen (DE)
(74) Vertreter: Patentanwälte Hauck, Graalfs, Wehnert, Döring, Siemons, Schildberg

(57) **Zusammenfassung**

Schubmaststapler mit einem Antriebsteil (10) und einem Mastteil, wobei das Antriebsteil (10) mindestens ein hinteres lenkbares von einem Fahrmotor (14) angetriebenes Antriebsrad (16) und einen Lenkmotor zur Lenkbetätigung des Antriebsrades und zwei vordere Lasträder aufweist, die in parallel beabstandeten Radarmen drehbar gelagert sind, elektromagnetischen Bremsvorrichtungen für die Lasträder und einer Steuervorrichtung für die Steuerung des Fahrmotors, des Lenkmotors und der Bremsvorrichtungen nach Maßgabe der Betätigung von Bedienelementen im Schubmaststapler, wobei jedes Lastrad (28) oder eine am Lastrad (28) angebrachte Ringscheibe (60) seitlich in Umfangsrichtung gleichmäßig beabstandet Zähne, Erhebungen und/oder Schlitze oder dergleichen aufweist und am Radarm (26) ein Näherungssensor (64) angebracht ist, der bei Drehung des Lastrades (28) drehzahlabhängig Sensorpulse erzeugt, die in die Steuervorrichtung gegeben werden.

## Beschreibung

Die Erfindung bezieht sich auf einen Schubmaststapler nach dem Oberbegriff des Patentanspruchs 1.

Die Besonderheit bei Schubmaststaplern ist, daß der Mast oder das Hubgerüst gegenüber dem Antriebsteil verfahrbar ist. Der Antriebsteil weist hinten zumeist mittig ein Antriebsrad auf, das zugleich gelenktes Rad ist. Zur Betätigung des Antriebsrads sind ein Fahrmotor und ein Lenkmotor vorgesehen. Am vorderen Ende des Antriebsteils sind parallel beabstandet Radarme angebracht, die Lasträder lagern. Außerdem sind in die Radarme Fahrschienen integriert für den Masthalter, so daß der Masthalter mit dem Mast zwischen den Radarmen verfahren werden kann.

Es ist bekannt, sowohl dem Antriebsrad als auch den Lasträdern Bremsen zuzuordnen. Die Bremse für das Antriebsrad kann unmittelbar dem Antriebsmotor zugeordnet werden. Aus DE 196 29 386 C1 ist bekannt, eine Bremswirkung über den Antriebsmotor generatorisch zu erzielen.

Für die Lastradbremse ist bekannt, hydraulische oder elektrische Bremseinrichtungen vorzusehen. Aus EP 0758591 A1 ist bekannt geworden, mit Hilfe eines Bremssignalgebers, der von einem Bremspedal betätigt wird, ein elektrisches Bremssignal zu erzeugen. Die elektrische Bremse ist zumeist derart ausgebildet, daß ein ringförmiger Bremsmagnet fest mit dem Radarm verbunden ist und in das topfförmige Lagerrad hineinsteht. Der Bremsmagnet wirkt mit einer Bremsscheibe zusammen, die im Innern des Lastrades begrenzt axial beweglich angeordnet ist und mit dem Lastrad umläuft.

Der Erfindung liegt die Aufgabe zugrunde, einen Schubmaststapler so auszustalten, daß man die Drehzahl der Lasträder ermitteln kann.

Diese Aufgabe wird durch die Merkmale des Patentanspruchs 1 gelöst.

Bei dem erfindungsgemäßen Schubmaststapler ist jedes Lastrad oder eine am Lastrad angebrachte Ringscheibe seitlich in Umfangsrichtung gleichmäßig beabstandet mit Zähnen, Erhebungen und/oder Schlitzen oder dergleichen versehen. Am Radarm ist ein Näherungssensor angebracht, der bei Drehung des Lastrades drehzahlabhängig Sensorimpulse erzeugt, die in die Steuervorrichtung gegeben werden.

Die Sensorscheibe, die vorzugsweise zur Fahrzeuginnenkontur hin gerichtet ist, weil der notwendige Bauraum für eine Scheibe und einen Sensor vorhanden ist, kann an das Lastrad angeschraubt, angeklebt oder angenietet oder auch eingepreßt werden. Alternativ ist möglich, das Lastrad selbst mit einer stirnseitigen Verzahnung zu versehen oder ähnlichen Einprägungen, die durch geeignete Formgebungsverfahren hergestellt werden. Der Sensor ist, wie erwähnt, ein Näherungssensor, der z. B. induktiv arbeitet oder von einem Hallsensor gebildet und entsprechend unempfindlich ist gegen Verunreinigungen und rauhen Betriebsbedingungen.

Mit Hilfe eines derartigen Drehzahlsensors kann die Drehzahl an jedem Lastrad ermittelt werden, was insbesondere von Vorteil ist bei Drehung des Flurförderzeugs um die Lastachse, Blockieren eines oder mehrerer Räder und bei Relativgeschwindigkeiten der Lasträder, z. B. bei Kurvenfahrten. Es ist daher möglich, von der Steuervorrichtung aus die Lasträder individuell in Abhängigkeit von ihrer Drehzahl zu bremsen, um z. B. unstabile Fahrzustände oder ein ungewünschtes Blockieren eines Lastrades beim Bremsen zu verhindern. Es versteht sich, daß ein gezieltes Abbremsen der einzelnen Lasträder auch von weiteren Parametern abhängig gemacht werden kann, beispielsweise von einer Kurvenfahrt bzw. vom Kurvenradius.

Nach einer weiteren Ausgestaltung der Erfindung ist die Ringscheibe so an dem topfförmigen Lastrad angebracht, daß sie den radialen Spalt zwischen dem Bremsmagneten und dem Lastrad überdeckt. Dies hat den Vorteil, daß wenig Schmutz in die Bremse gelangen kann und außerdem die Bremse bei der Montage nicht aus dem Lastrad fällt. Wenn von Bremsmagneten gesprochen wird, dann ist damit eine Bremseinheit gemeint, die unter anderem einen Elektromagneten beinhaltet, aber insbesondere auch ein den Magneten umgebendes Gehäuse einschließt, das am Radarm befestigt wird.

Wie schon erwähnt, weist ein Schubmaststapler an den Radarmen Fahrschienen auf für den Masthalter. Nach einer Ausgestaltung der Erfindung ist der Näherungssensor an der Unterseite der Fahrschienen nahe dem freien Ende des Radarms angebracht. Entsprechend ist vorzugsweise die Führung des Kabels für den Näherungssensor an der Unterseite der Fahrschienen vorgesehen. Zu diesem Zweck kann an der Unterseite ein Rohr oder ein geeignetes Schutzprofil angebracht werden, damit das Sensorkabel im Betrieb nicht beschädigt oder zerstört wird.

Für die Zuführung des Sensorkabels ist nach einer weiteren Ausgestaltung der Erfindung vorteilhaft, wenn auf der dem Antriebsteil zugekehrten Seite am Bremsmagneten ein Schutzbauteil für ein Sensorkabel zwischen dem Bremsmagneten und der Laufschiene angebracht ist, wobei das Sensorkabel bis zum Schutzbauteil im Radarm geführt ist und nach dem Schutzbauteil an der Unterseite der Laufschienen geführt und angebracht ist. Das Schutzbauteil kann zugleich das Bremskabel führen, das ebenfalls über das Radarmprofil herangeführt wird. Nach einer Ausgestaltung der Erfindung ist der Schutzbauteil einteilig aus einem Blechzuschnitt geformt mit zwei übereinander liegenden beabstandeten Backen, die an dem Bremsmagneten befestigt sind und an der Laufschiene anliegen. Dadurch ist zum einen ein horizontaler und zum anderen ein vertikaler Führungskanal geschaffen für die Aufnahme des Bremskabels bzw. des Sensorkabels. Es versteht sich, daß das Schutzbauteil auch aus Kunststoff geformt sein kann.

Die Erfindung wird nachfolgend anhand eines in Zeichnungen dargestellten Ausführungsbeispiels näher erläutert.
- Fig. 1: zeigt schematisch in Seitenansicht einen Schubmaststapler nach der Erfindung.
- Fig. 2: zeigt das Ende eines Radarms des Schubmaststaplers nach Fig. 1 von der Innenseite.
- Fig. 3: zeigt einen Schnitt durch die Darstellung nach Fig. 2 entlang der Linie 3-3.
- Fig. 4: zeigt einen Schnitt durch die Darstellung nach Fig. 3 entlang der Linie 4-4.
- Fig. 5: zeigt einen Schnitt durch die Darstellung nach Fig. 2 entlang der Linie 5-5.
- Fig. 6: zeigt eine isometrische Darstellung eines Schutzbauteils im Bereich des Lastrades nach den Fign. 2 bis 5.
- Fig. 7: zeigt die Seitenansicht des Schutzbauteils nach Fig. 6 von der Unterseite.
- Fig. 8: zeigt einen Schnitt durch die Darstellung des Schutzbauteils nach Fig. 7 entlang der Linie 8-8.

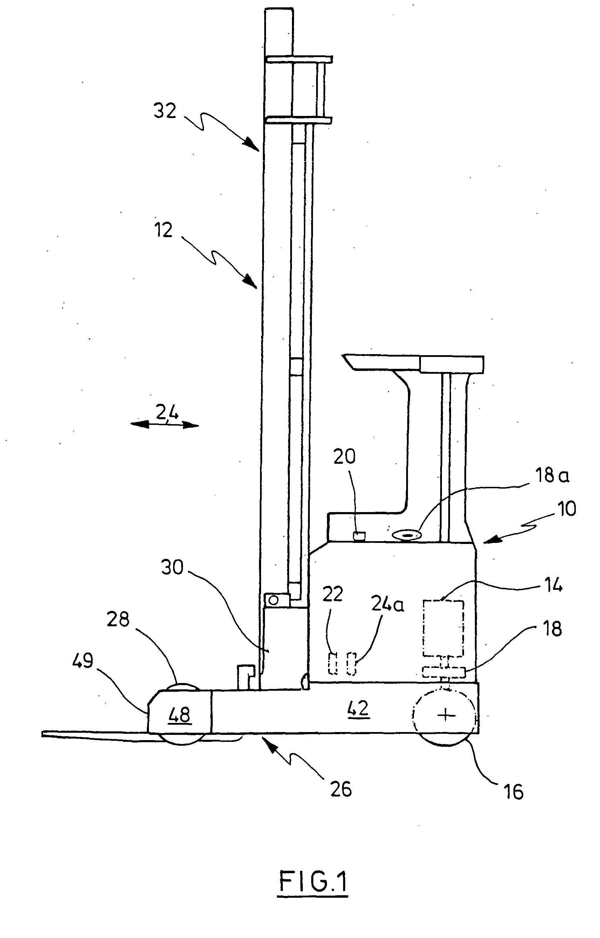

In Fig. 1 ist schematisch ein Schubmaststapler in Seitenansicht dargestellt, mit einem Antriebsteil 10 und einem Lastteil 12. Der Antriebsteil enthält in einem Gehäuse einen Antriebsmotor 14 (gestrichelt gezeichnet), der ein hinteres Antriebsrad 16 antreibt. Über eine geeignete Lagerung 18 und mit Hilfe eines Lenkmotors (nicht gezeigt) kann das Antriebsrad 16 außerdem um eine vertikale Achse verschwenkt werden. Im Antriebsteil ist auch ein Fahrersitzplatz vorgesehen (nicht weiter gezeigt), von dem aus ein Lenkrad 18a und ein Bedienelement 20 betätigbar sind. Zum Fahrersitzplatz gehören auch ein Fahrpedal 22 und ein Bremspedal 24a (ebenfalls gestrichelt gezeichnet). Zu beiden Seiten des Antriebsteils 10 erstrecken sich nach vom Radarme, von denen einer bei 26 zu erkennen ist. Die Radarme lagern am vorderen Ende Lasträder, von denen das Lastrad 26 dargestellt ist. Ein Masthalter 30 hält einen Hubmast 32, wobei der Masthalter 30 entlang von Fahrschienen, die jeweils auf die Innenseite der Radarme 26 angebracht sind, in Richtung des Doppelpfeils 34 verschoben werden kann. Die beschriebenen Einzelheiten sind für Schubmaststapler allgemein bekannt. Nachfolgend wird lediglich die Lagerung des Lastrades 28 behandelt sowie die Bremsvorrichtung für das Lastrad. Der Aufbau für den anderen Radarm ist verständlicherweise identisch.

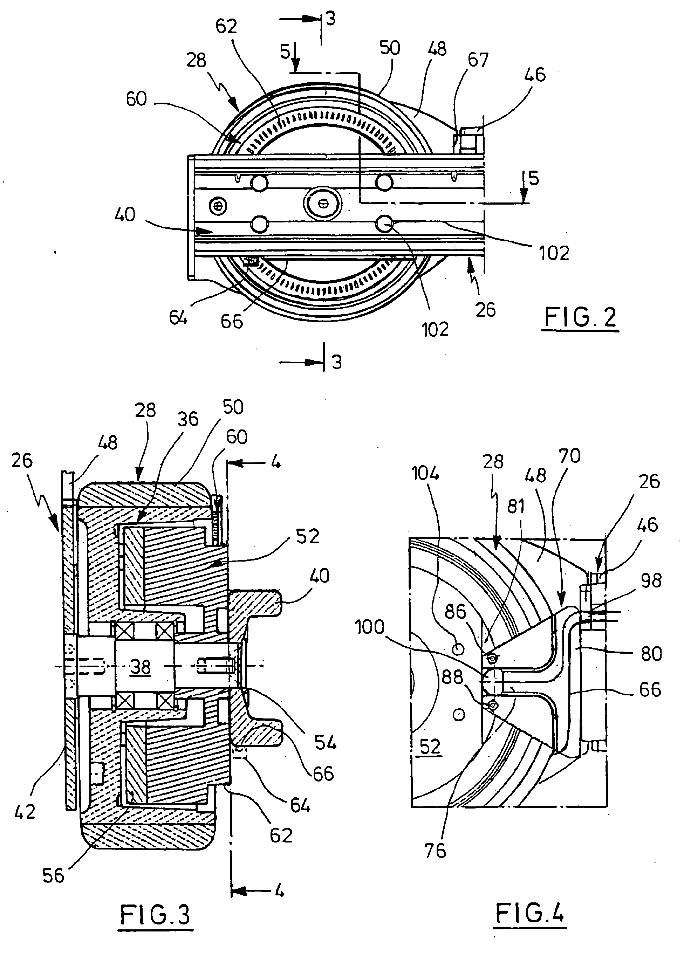

Der Aufbau des Lastrades geht aus den Fign. 2 bis 5 hervor. Das Lastrad 28 weist einen topfförmigen Radkörper 36 auf, der mit Hilfe eines Achsbolzens 38 und zweier Wälzlager drehbar gelagert ist. Der Radarm 26 weist eine Fahrschiene 40 auf in Form eines aufrecht stehenden U-Profils. Der Radarm 26 weist ferner parallel und im Abstand zur Fahrschiene 40 ein Radarmprofil auf, mit einem länglichen vertikalen Blechteil 42, das sich parallel und im Abstand zur Fahrschiene 40 erstreckt. In Öffnungen von Fahrschiene 40 und Blechteil 42 ist der Achsbolzen 38 befestigt. Das Radarmprofil weist eine obere Abdeckung für den Radarm auf, welche durch eine Abkantung der Blechplatte 42 gebildet ist. Die obere Abdeckung ist bei 46 in den Figuren 2 und 4 angedeutet. Die Blechplatte 42 erweitert sich auf der Außenseite des Lastrades 28, wie bei 48 in den Fign. 2 bis 4 zu erkennen. Das Lastrad 28 steht nach oben und nach unten über den Radarm 26 hinaus.

Der Radkörper 36 weist eine Bereifung 50 auf, auf die vorliegend nicht eingegangen werden soll. Er ist, wie erwähnt, topfförmig zur Aufnahme einer elektromagnetischen Bremsvorrichtung. Diese besteht aus einem ringförmigen Bremsmagneten 52 (Wenn nachfolgend vom Bremsmagnet die Rede ist, ist in erster Linie die Gesamtanordnung einschließlich des Gehäuses gemeint. Auf den Aufbau des Magneten soll im einzelnen nicht eingegangen werden). Der Bremsmagnet 52 ist mit einem zylindrischen Abschnitt 54 auf dem Achsbolzen 38 gelagert. Eine Bremsscheibe 56 ist begrenzt axial beweglich zwischen dem Radkörper 36 und dem stationären Bremsmagneten 52 gelagert, ist jedoch mit dem Radkörper 36 drehfest. Bei einer Betätigung des Bremsmagneten 52 wird die Bremsscheibe 56 gegen den Bremsmagneten 52 gezogen und es findet eine Reibungsbremsung statt. Auf den Aufbau der Bremsflächen muß im einzelnen nicht eingegangen werden, da er im Prinzip bekannt ist.

An der Innenseite der Felge des Radkörpers 36 ist ein Sensorring 60 angebracht. Die Anbringung kann durch Verschraubung, Vernietung, Verklebung oder durch ein Eindrücken in eine entsprechende Ausnehmung der Felge erfolgen. Der Sensorring 60 erstreckt sich radial einwärts in eine Ringausnehmung 62 des Bremsmagneten 52 und überdeckt weitgehend den Spalt zwischen Bremsmagnet 52 und Bremsscheibe 56 einerseits und Radkörper 36 andererseits. Auf diese Weise wird das Eindringen von Verunreinigungen in die Bremse erschwert.

Wie aus Fig. 2 hervorgeht, ist der Sensorring 60 mit einer kreisförmigen Anordnung von radialen Schlitzen 62 versehen, die gleichmäßig beabstandet angeordnet sind.

Statt der Schlitze 62 können auch Erhebungen vorgesehen werden oder sonstige Ausprägungen, um von einem Näherungssensor 64 erfaßt zu werden. Der Näherungssensor 64 ist an der Unterseite der Fahrschiene 40 angeordnet. Er arbeitet z. B. induktiv oder als Hallsensor.

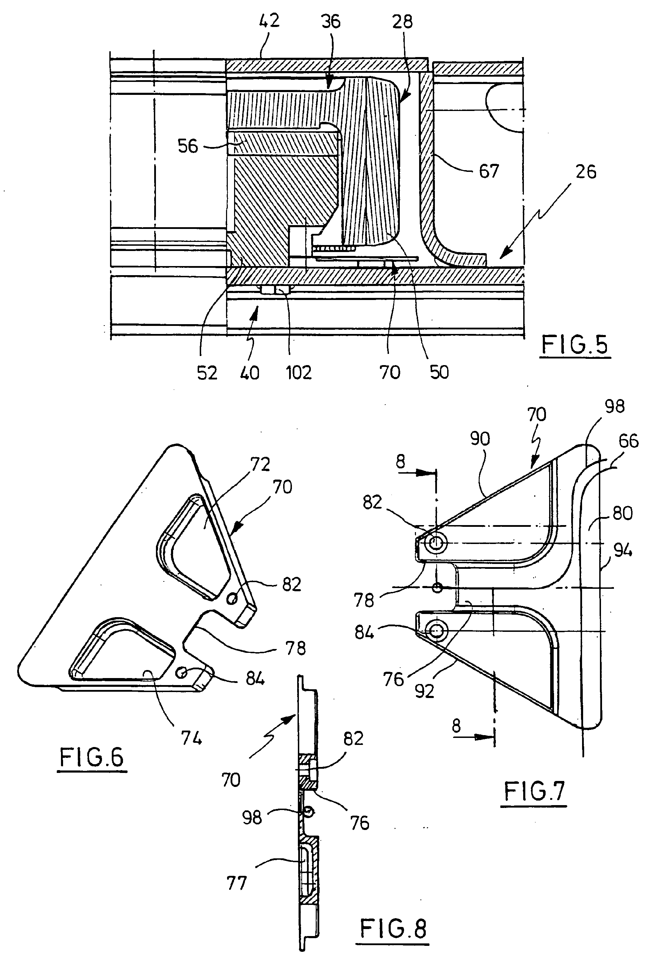

Der Näherungssensor 64 erzeugt Pulse nach Maßgabe der Drehzahl des Lastrades 28, die über ein Sensorkabel zu einer nicht gezeigten Steuervorrichtung im Antriebsteil 10 des Schubmaststaplers geführt ist. Ein solches Kabel ist in Fig. 4 bei 66 angeordnet. Es wird über den Radarm 26 herangeführt und führt in den Raum ein, der im Radarm 26 das Lastrad 28 und die Bremsvorrichtung aufnimmt. Dieser ist durch eine Querwand 67 vom übrigen Radarm getrennt, wie aus Fig. 5 hervorgeht. In diesem Bereich sitzt ein Schutzbauteil 70, das am Bremsmagneten 52 angebracht ist und zwischen dem Lastrad 28 und dem Bremsmagneten 52 einerseits und der Schiene 40 andererseits angeordnet ist. Der Aufbau des Schutzbauteils 70 geht deutlicher aus den Fign. 6 bis 8 hervor.

Das Schutzbauteil 70 ist im Umriß trapezförmig und einteilig aus einem Blechzuschnitt geformt. Beidseits der Längsachse sind trapezförmige Vertiefungen 72, 74 eingeprägt, die auf der gegenüberliegenden Seite als Erhebungen einen horizontalen Kanal 76 bilden, der in eine Ausnehmung 78 am verjüngten Ende des Schutzbauteils 70 mündet. Auf der gegenüberliegenden Seite ist ein vertikaler Kanal 80 gebildet, der sich über die Länge des Schutzbauteils 70 am anderen Ende erstreckt. Am verjüngten Ende weist das Schutzbauteil 70 auf den gegenüberliegenden Seiten der Ausnehmung 78 Öffnungen 82, 84 auf. Mit Hilfe dieser Öffnungen 82, 84 kann das Schutzbauteil 70 in einer Ausnehmung 81 des Bremsmagneten 56 verschraubt werden wie bei 86 und 88 in Fig. 4 angedeutet. Das Schutzbauteil 70 ist im Bereich der Einprägungen 72, 74 an der Außenseite mit einer Abkantung 90 bzw. 92 versehen (siehe auch Fig. 6). Am breiteren Ende wird der Kanal 80 im wesentlichen von den Rückseiten der Einprägungen 72 ,74 bzw. Erhebungen und einem flachen Abschnitt 94 des Schutzbauteils 70 gebildet.

Wie erwähnt, wird das Sensorkabel 66 im Radarm 26 geschützt geführt und tritt in den Aufnahmeraum für das Lastrad 28 aus dem Radarm heraus und wird dabei um 90° in den Kanal 80 nach unten umgelenkt. Nach außen ist der Kanal 80 von der Fahrschiene 40 begrenzt. Das Sensorkabel 66 wird dann anschließend unter die Fahrschiene 40 geführt, wie gestrichelt bei 66 in Fig. 3 angedeutet. Da eine Befestigung an der Fahrschiene 40 erfolgen muß, ist vorzugsweise ein Schutzrohr oder ein Schutzprofil an der Unterseite der Fahrschiene 40 angebracht, was jedoch nicht gezeigt ist.

Wie aus den Fign. 4, 7 und 8 ferner hervorgeht, ist ein sogenanntes Bremskabel 98 ebenfalls im Radarm 26 geführt und wird wie das Sensorkabel im Kanal 80 nach unten umgelenkt. Es wird jedoch erneut in die alte Richtung umgelenkt in den Kanal 76 hinein und von dort zu einem Anschluß 100 des Bremsmagneten 56 hinein, wie in Fig. 4 angedeutet. Der Kanal ist zum Anschluß 100 ausgerichtet und der Anschluß 100 liegt im Bereich der Ausnehmung 78 des Bauteils 70. Im Bereich des Lastrades 28 sind daher die Kabel 66, 98 ausreichend vor Beschädigung und sonstige Beeinträchtigungen geschützt.

Bei der Montage von Lastrad und Bremse werden zunächst die Bremsscheibe 56 und der Bremsmagnet 52 auf das Trägerrad 36 aufgebracht. Hierbei ist zunächst die Sensorscheibe 60 lose in der Ausnehmung 62 angeordnet. Nach der Montage der Bremse wird der Sensorring in geeigneter Weise am Radkörper 36 befestigt, beispielsweise durch Verschraubung. Danach wird das Schutzbauteil 70 am Bremsmagneten 52 befestigt. Das Bremskabel 98 ist am Anschluß angeschlossen und das Sensorkabel 66 ist in das Schutzbauteil 70 eingelegt. Anschließend wird die gesamte Anordnung in den Radarm 26 eingesetzt, und durch Einführen des Achsbolzens 38 festgelegt. Der Bolzen 38 wird auf nicht beschriebene Art und Weise in der Fahrschiene 40 und im Seitenblech 42 befestigt. Dann erfolgt die Verschraubung des Bremsmagneten 52 mit der Fahrschiene 40, wie bei 102 in Fig. 2 dargestellt. Hierfür werden insgesamt vier Schraubenbolzen 102 verwendet, die in Gewindebohrungen des Bremsmagneten 52 eingeschraubt werden. Zwei Gewindebohrungen sind in Fig. 4 bei 104 zu erkennen.

Das Schutzbauteil 70 kann für beide Radarme identisch ausgebildet sein.

## Patentansprüche

1. Schubmaststapler mit einem Antriebsteil und einem Mastteil, wobei das Antriebsteil mindestens ein hinteres lenkbares von einem Fahrmotor angetriebenes Antriebsrad und einen Lenkmotor zur Lenkbetätigung des Antriebsrades und zwei vordere Lasträder aufweist, die in parallel beabstandeten Radarmen drehbar gelagert sind, elektromagnetischen Bremsvorrichtungen für die Lasträder und einer Steuervorrichtung für die Steuerung des Fahrmotors, des Lenkmotors und der Bremsvorrichtungen nach Maßgabe der Betätigung von Bedienelementen im Schubmaststapler, **dadurch gekennzeichnet, daß** jedes Lastrad (28) oder eine am Lastrad (28) angebrachte Ringscheibe (60) seitlich in Umfangsrichtung gleichmäßig beabstandet Zähne, Erhebungen und/oder Schlitze oder dergleichen aufweist und am Radarm (26) ein Näherungssensor (64) angebracht ist, der bei Drehung des Lastrades (28) drehzahlabhängig Sensorpulse erzeugt, die in die Steuervorrichtung gegeben werden.

2. Schubmaststapler nach Anspruch 1, **dadurch gekennzeichnet, daß** die Ringscheibe (60) an der Innenseite des Lastrades (28) angebracht ist.

3. Schubmaststapler nach Anspruch 1 oder 2, **dadurch gekennzeichnet, daß** die Ringscheibe (60) an das Lastrad (28) angeschraubt, angeklebt, angenietet oder eingepreßt ist.

4. Schubmaststapler nach einem der Ansprüche 1 bis 3, **dadurch gekennzeichnet, daß** ein ringförmiger Bremsmagnet (52) an der Innenseite des Radarms (26) fest angebracht ist und in das Innere des topfförmigen Lastrades (28) hineinsteht und mit einer axial bewegbaren, mit dem Lastrad (28) mitdrehenden Bremsscheibe (56) zusammenwirkt und die Sensorscheibe (60) an der offenen Seite des Lastrades (28) angebracht ist und radial nach innen weist und den radialen Spalt zwischen Bremsmagnet (52) und Lastrad (28) überdeckt.

5. Schubmaststapler nach einem der Ansprüche 1 bis 4, **dadurch gekennzeichnet, daß** die Radarme (26) ein aus gekantetem Blech geformtes Längsprofil und eine Laufschiene (40) an der Innenseite des Längsprofils aufweisen, ein das Lastrad (28) lagernder Achsbolzen (38) in der Laufschiene (40) und einem parallel beabstandeten Blech (42) des Längsprofils gelagert ist und der Näherungssensor (64) an der Unterseite der Laufschiene (40) nahe dem freien Ende des Radarms (26) angebracht ist.

6. Schubmaststapler nach Anspruch 5, **dadurch gekennzeichnet, daß** auf der dem Antriebsteil (10) zugewandten Seite am Bremsmagneten (52) ein Schutzbauteil (70) für ein Sensorkabel (66) zwischen dem Bremsmagneten (52) und der Laufschiene (40) angebracht ist, wobei das Sensorkabel (66) bis zum Schutzbauteil (70) im Radarm (56) geführt und nach dem Schutzbauteil (70) zur Unterseite der Laufschiene (40) geführt und dort angebracht ist.

7. Schubmaststapler nach Anspruch 6, **dadurch gekennzeichnet, daß** das Schutzbauteil (70) zugleich ein Bremskabel (98) für den Bremsmagneten (52) führt, das im Radarm (26) herangeführt ist.

8. Schubmaststapler nach Anspruch 6 und 7, **dadurch gekennzeichnet, daß** das Schutzbauteil (70) einteilig aus einem Blechzuschnitt geformt ist mit zwei übereinander liegenden beabstandeten Backen (72, 74), die am Bremsmagneten (52) befestigt sind und an der Laufschiene (40) anliegen, so daß ein horizontaler Führungskanal (76) für das Bremskabel (98) und ein quer dazu liegender vertikaler Führungskanal (80) für Bremskabel (98) und Sensorkabel (66) gebildet sind.
